# EUROPÄISCHE PATENTANMELDUNG

(11) **EP 2 775 099 A1**
(43) Veröffentlichungstag der Anmeldung: **10.09.2014**
(21) Anmeldenummer: 13157912.0
(22) Anmeldetag: 06.03.2013
(51) Int. Cl.: F01D 5/18

(54) **Verfahren zur Neuherstellung eines Diffusors in einem Schichtsystem**

(71) Anmelder: Siemens Aktiengesellschaft, 80333 München (DE)
(72) Erfinder: Menke, Christian, 45329 Essen (DE); Settegast, Silke, 10439 Berlin (DE); Vosberg, Volker, 45476 Mülheim an der Ruhr (DE)

(57) **Zusammenfassung**

Durch die Vorabeinbringung eines Durchgangslochs in eine Substrat vor der Beschichtung und der Entfernung danach werden die Bearbeitungszeiten zur Herstellung eines Durchgangslochs mit Diffusor verkürzt und dadurch auch die Zwischenschichten weniger belastet.

## Beschreibung

Die Erfindung betrifft das Herstellen von einem Diffusor in einem Schichtsystem.

Bauteile, wie Turbinenschaufel der ersten und zweiten Reihe werden bei sehr hohen Temperaturen eingesetzt und zum Schutz vor Oxidation/Korrosion und Wärme werden sie mit metallischen und/oder thermischen Schichten versehen.
Insbesondere bei Turbinenschaufeln weisen diese noch zusätzliche Kühlluftlöcher aus, aus denen Kühlluft herausströmt. Diese Kühlluftlöcher weisen an ihrer Oberfläche an der äu-βersten Schicht einen Diffusor auf, damit sich eine schützende Luftschicht über die Oberfläche der Turbinenschaufel legt. Der Diffusor reicht durch die Schichten bis in das Substrat hinein. Da der Diffusor eine Verbreiterung des zylindrischen unteren Anteils darstellt muss sehr viel Material abgetragen werden.

Es ist daher Aufgabe der Erfindung ein Verfahren aufzuzeigen, mit dem dies verbessert durchgeführt werden kann.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können um weitere Vorteile zu erzielen.

Durch das Verfahren können solche Diffusoren schneller hergestellt werden und auch die Zwischenschichtanbindung der Schichten untereinander und/oder mit dem Substrat wird deutlich geringer belastet.

Es zeigen:
- Figur 1, 2: ein Verfahren aus dem Stand der Technik,
- Figur 3, 4: ein erfindungsgemäße Verfahren,
- Figur 5: eine Liste von Superlegierung und
- Figur 6: eine Turbinenschaufel.

Die Figuren und die Beschreibung stellen nur Ausführungsbeispiele der Erfindung dar.

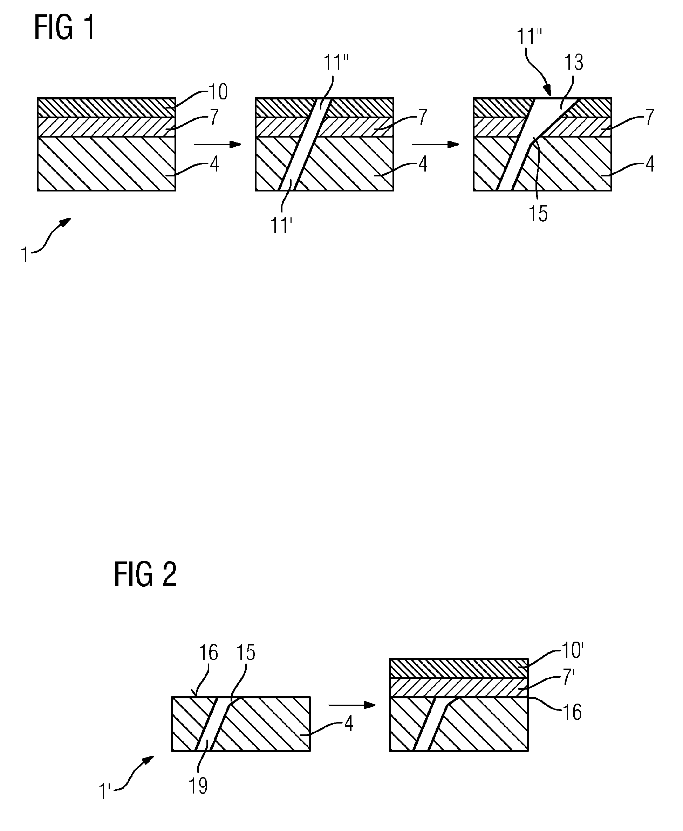

In Figur 1 ist ein Schichtsystem 1 und ein Herstellungsverfahren nach dem Stand der Technik gezeigt, das ein Substrat 4 mit einer inneren Schicht 7 und einer äußersten Schicht 10 aufweist.

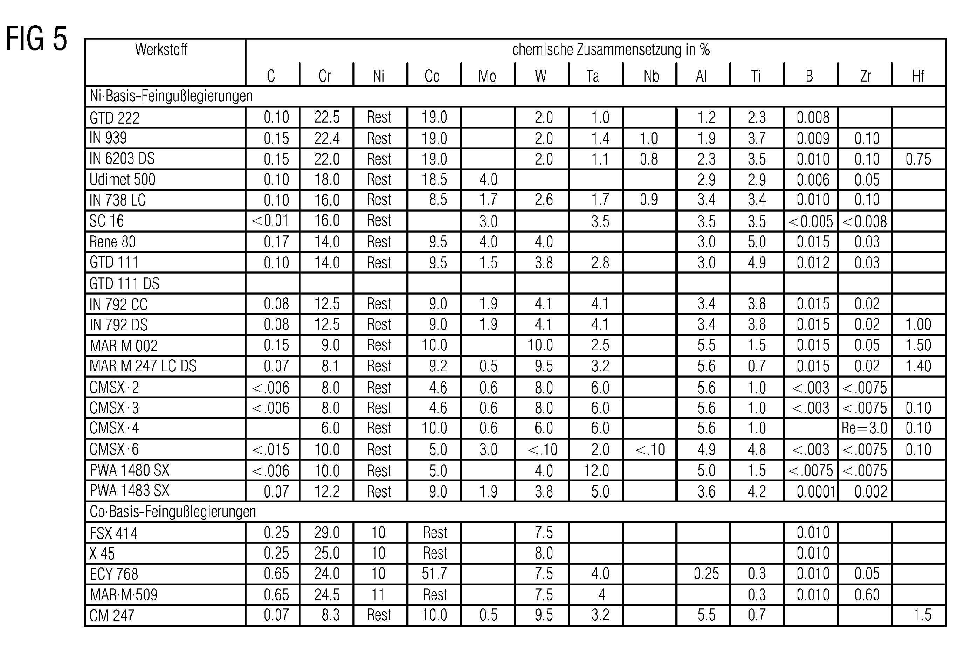

Dies ist bei Turbinenschaufeln 120, 130 (Fig. 5) ein metallisches Substrat 4, eine metallische Haftvermittlerschicht (MCrAlX) mit einer optional vorhandenen Aluminiumoxidschicht darauf und einer äußersten keramischen Schicht 10.

Zur Herstellung eines Diffusors 13 wird zuerst ein zylindrisches Loch 11', 11'' durch die Schichten 7, 10 und durch das Substrat 4 erzeugt.

Der Querschnitt des Lochs 11', 11'' kann auch eine andere Geometrie aufweisen, aber zumindest ist er über die gesamte Länge nach dem ersten Herstellungsschritt über die Tiefe gesehen konstant.

Ein oberer Teil 11'' des Durchgangslochs 11', 11'' wird im Bereich der Schichten 7, 10 und des Substrats 4 verbreitert, so dass ein Diffusor 13 entsteht, wie er rechts in Figur 1 dargestellt ist. Der Diffusor 13 weist auch einen Diffusoranteil 15 im Substrat 4 auf.

Figur 2 zeigt ein Bauteil 1' nach einem Einsatz und nachdem Schichten entfernt wurden.
Eine nach Figur 1 hergestellte Turbinenschaufel 120, 130 kann nach dem Einsatz gemäß dem Stand der Technik wieder verwendet werden, wobei zuerst die Schichten 7, 10 entfernt werden, das Substrat 4 inspiziert und ggf. überarbeitet wird und dann neue Schichten 7, 10 aufgebracht werden.
Das Substrat 4 weist daher schon an seiner Oberfläche 16 den Diffusoranteil 15 des Durchgangslochs 10 auf, das von der erstmaligen Herstellung des Diffusors 13 (Fig. 1) herrührt.

Dann werden Schichten 7', 10' aufgebracht, die sich auch in dem Bereich des Diffusors niederschlagen (hier im Bereich 15). Dann wird der Overspray entfernt oder es werden geeignete Maßnahmen getroffen um das Loch 10 durch Stopfen zu schützen, die nach dem Beschichten entfernt werden und der Diffusor 13 entsprechend seiner Endgeometrie geformt wird.

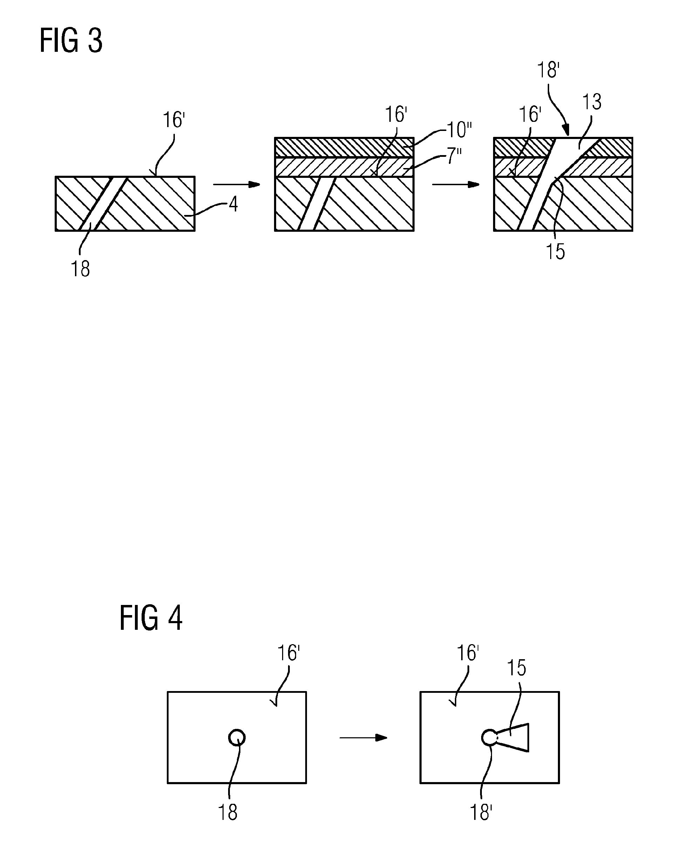

In Figur 3 ist ein erfindungsgemäßes Verfahren zur Neuherstellung eines Durchgangslochs 18' mit Diffusor 13 dargestellt.
In das Substrat 4 wird ein Durchgangsloch 18 hergestellt, das insbesondere rotationssymmetrisch ist oder über seine Tiefe gesehen einen konstanten Querschnitt aufweist. Dies kann durch EDM oder Laserbearbeitung erfolgen.

Das Substrat 4 weist aber im Bereich seiner Oberfläche 16' keine Verbreiterung auf wie beim wiederaufbereiten (Refurbishment) Bauteil 1' gemäß Figur 2.

Erst dann werden Schichten 7" (metallisch, ganz vorzugsweise MCrAlX) und 10 " (Keramik) aufgebracht.

Das Material der Schichten 7'', 10'' dringt in das Loch 18 ein.

Erst dann wird durch diese Schichten 7'', 10'' der Diffusor 13 erzeugt und erstmalig wird noch ein Diffusoranteil 15 des Diffusors 13 im Substrat 4 erzeugt, also Material des Substrats 4 für den Diffusor 13 abgetragen.
Dies erfolgt vorzugsweise durch Laserbearbeitung.

Eine Aufsicht auf die Oberfläche 16' ist in Figur 4 gezeigt. Links ist der ursprüngliche Verlauf (gemäß Figur 3 ganz links) des Durchgangslochs 18 an der Oberfläche 16' vor der Verbreiterung (Fig. 4 rechts) zur Herstellung des Diffusors 13.

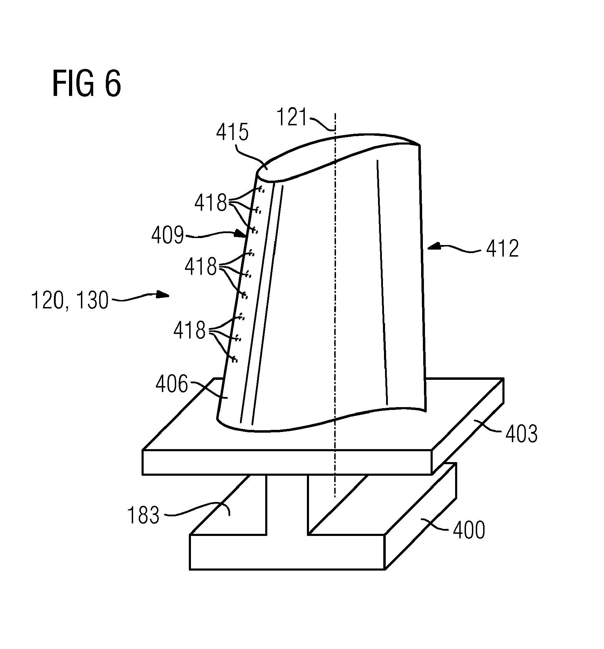

Ein solches Bauteil 1, 120, 130 weist vorzugsweise eine nickel- oder kobaltbasierte Superlegierung auf, insbesondere gemäß Figur 5 und stellt vorzugsweise eine Turbinenschaufel gemäß Figur 6 dar.

## Patentansprüche

1. Verfahren
zur Neuherstellung eines Durchgangslochs (18') in ein Schichtsystem aus metallischem Substrat (4) und zumindest einer Schicht (7'', 10") mit einem äußeren Diffusor (13),
bei dem in das Substrat (4) zuerst ein Durchgangsloch (18) mit einem Querschnitt,
insbesondere mit einem konstantem Querschnitt,
über die Dicke des Substrats (4) eingebracht wird,
bei dem das Substrat (4) erst dann beschichtet wird, insbesondere mit einer inneren metallischen Schicht (7'') und/oder
einer äußeren keramischen Schicht (10'')
und
dass dann in einem letzten Bearbeitungsschritt ein Diffusor (13) in die Schichten (7'', 10'') und in das Substrat (4) eingebracht wird,
wobei erstmalig für den Diffusor (13) zusätzliches Material in einem Diffusoranteil (15) des Substrats (4) entfernt wird,
wobei der Diffusoranteil (15) eine Verbreiterung des Durchgangslochs (18) an der Oberfläche (16') darstellt, und wobei der Diffusor (13) eine unsymmetrische Verbreiterung des oberen Teils des Durchgangslochs (18) darstellt.

2. Verfahren nach Anspruch 1,
bei dem ein metallisches Substrat (4) bearbeitet wird.

3. Verfahren nach einem oder beiden der Ansprüche 1 oder 2,
bei dem zumindest eine Schicht (10") eine keramische Schicht darstellt.

4. Verfahren nach einem oder mehreren der vorherigen Ansprüche 1, 2 oder 3,
bei dem ein Laserabtragungsverfahren verwendet wird, insbesondere unter Verwendung von deutlich unterschiedlichen Pulsfrequenzen.

5. Verfahren nach einem oder mehreren der vorherigen Ansprüche 1, 2, 3 oder 4,
bei dem das Durchgangsloch (18) mit Pulsdauern im Millisekundenbereich hergestellt wird,
insbesondere größer gleich 1ms.

6. Verfahren nach einem oder mehreren der vorherigen Ansprüche,
bei dem der Diffusor (13) oder zumindest die Entfernung der keramischen Schichten und des Teils (15) mit Pulsdauern im Nanosekundenbereich oder Subnanosekundenbereich,
insbesondere kleiner gleich 800ns,
ganz insbesondere kleiner gleich 600ns,
erfolgt.
